(19) Europäisches Patentamt
European Patent Office
Office européen des brevets

(11) **EP 4 539 070 A1**

(12) **EUROPEAN PATENT APPLICATION**
published in accordance with Art. 153(4) EPC


(43) Date of publication:
**16.04.2025 Bulletin 2025/16**

(21) Application number: **23839444.9**

(22) Date of filing: **26.06.2023**

(51) International Patent Classification (IPC):
***H01G 9/055*** *(2006.01)* ***H01G 9/035*** *(2006.01)*
***H01G 9/042*** *(2006.01)* ***H01G 9/145*** *(2006.01)*

(52) Cooperative Patent Classification (CPC):
**H01G 9/035; H01G 9/042; H01G 9/055; H01G 9/145**

(86) International application number:
**PCT/JP2023/023609**

(87) International publication number:
**WO 2024/014270 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022 JP 2022112425**



(71) Applicant: **Nippon Chemi-Con Corporation**
**Tokyo 141-8605 (JP)**

(72) Inventors:
- **HATAE Tatsuru**
  **Tokyo 141-8605 (JP)**
- **KOSEKI Kazuya**
  **Tokyo 141-8605 (JP)**
- **NAGAHARA Kazuhiro**
  **Tokyo 141-8605 (JP)**

(74) Representative: **AWA Sweden AB**
**Matrosgatan 1**
**Box 5117**
**200 71 Malmö (SE)**


(54) **ELECTROLYTIC CAPACITOR**


(57) An electrolytic capacitor that can suppress the total amount of gas generated inside the electrolytic capacitor is provided. The electrolytic capacitor includes anode foil, a cathode body, and electrolytic solution. Dielectric oxide film is formed on the anode foil. The cathode body has a reduction site on a surface thereof. The cathode body includes cathode foil formed of valve metal and a carbon layer laminated on the cathode foil, and the carbon layer becomes the reduction site. The electrolytic solution intervenes between the anode foil and the cathode body, and contains nitro compound. The nitro compound is contained in the electrolytic solution at a rate of 1.5 mg or less per 1 $cm^2$ of the projected area of the cathode body.


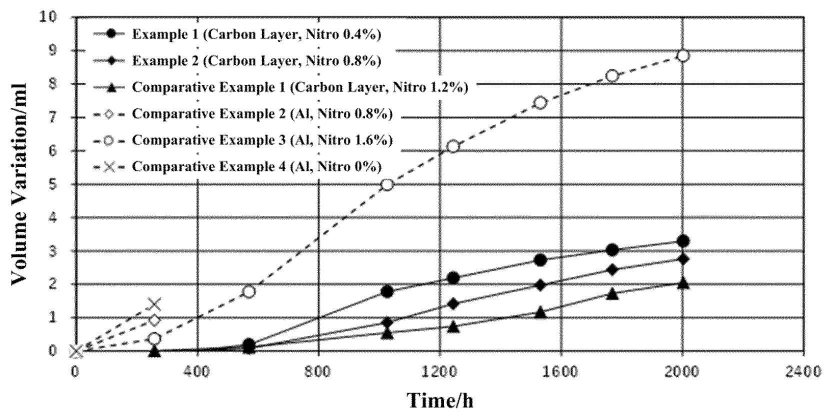


*Fig. 1*

EP 4 539 070 A1

## Description

### FIELD OF INVENTION

The present disclosure relates to an electrolytic capacitor.

### BACKGROUND

An electrolytic capacitor includes anode foil in which dielectric oxide film is formed on valve metal foil such as tantalum or aluminum, and cathode foil formed of the same or different metal, facing each other. A lead terminal is connected to the anode foil and the cathode foil by stitching, cold-welding, ultrasonic welding, and laser welding, etc. A pair of the anode foil and the cathode foil is housed in an outer casing, and the outer casing is sealed by a sealing body. The lead terminal is drawn out from the sealing body.

Electrolytic solution intervenes between the anode foil and the cathode foil. The electrolytic solution intervenes between the anode foil and the cathode foil and closely contacts with an uneven surface of the anode foil, and acts as a true cathode. The electrolytic solution repairs a deteriorated portion, such as deterioration and damages, of the dielectric oxide film formed on the anode foil by leakage current. However, hydrogen gas starts generated due to film repair of the dielectric oxide film by leakage current.

That is, the anode reaction expressed by the below chemical reaction formula (1) occurs at the anode side at the time of film repair due to leakage current. Then, receiving electrons generated by the anode reaction, the cathode reaction reducing hydrogen ions expressed by the below chemical reaction formula (2) occurs at the cathode-side when repairing film by leakage current. Atomic hydrogen generated by the chemical reaction formula (2) bonds as expressed by the below chemical formula (3), generating hydrogen gas.

$$2Al + 3H_2O \rightarrow Al_2O_3 + 6H^+ + 6e^- \cdots \quad (1)$$

$$6H^+ + 6e^- \rightarrow 6H_{ad} \cdots \quad (2)$$

$$\mathbf{6H_{ad}} \rightarrow 3H_2 \cdots \quad (3)$$

The generation of hydrogen gas raises the internal pressure of the electrolytic capacitor, such that the casing housing a capacitor element, and the sealing body swell. In the worst case, the rise in the internal pressure of the electrolytic capacitor due to hydrogen gas may cause a pressure releasing valve provided in the electrolytic capacitor to open or liquid to leak. Therefore, nitro compounds may be added to the electrolytic solution to suppress the generation of hydrogen gas by the nitro compounds (for example, refer Patent Document 1).

### PRIOR ART DOCUMENT

### PATENT DOCUMENT

Patent Document 1: JP H04-10512 A

### SUMMARY OF INVENTION

### PROBLEMS TO BE SOLVED BY INVENTION

Here, the electrolytic capacitor can be regarded as a series capacitor in which the capacitance of the anode foil and the capacitance of the cathode foil are synthesized by series connection. When the capacitance of the cathode foil is sufficiently larger than the capacitance of the anode foil, the capacitance C [F] of the electrolytic capacitor can be approximated by the below formula 1, in which S [$m^2$] is the effective surface area of the anode foil facing the cathode foil, d [m] is the thickness of the dielectric oxide film formed on the surface of the anode foil, ε is the dielectric constant of the dielectric oxide film, and the vacuum permittivity is $8.854 \times 10^{-12}$ [F/m].

(Formula 1)

$$C = 8.854 \times 10^{-12} \times \varepsilon \cdot S/d$$

The withstand voltage of 160 V or more may be required for the electrolytic capacitor, such as for in-vehicle

application for electric vehicles and power application. The thickness d of the dielectric oxide film of the anode foil largely affects the withstand voltage of the electrolytic capacitor. Therefore, the electrolytic capacitor that can withstand middle or high voltage of 160 V or more requires thick dielectric oxide film. However, thickening the dielectric oxide film means increasing the thickness d of the formula 1, which reduces the capacitance C. Accordingly, the electrolytic capacitor for middle or high voltage application of 160 V or more includes an enlarged surface layer formed by many tunnel-shaped pits on the anode foil. Also, the electrolytic capacitor includes an enlarged surface layer with tunnel-shaped pits that fully or partially penetrate the anode foil on the anode foil.

According to such surface enlarging technique, the electrolytic capacitor for middle or high voltage application of 160 V or more increases the surface area of the anode foil while maintaining the thickness of the dielectric oxide film. However, in recent years, larger capacitance is demanded for the electrolytic capacitor for middle or high voltage application of 160 V or more. In other words, thinning the dielectric oxide film while maintaining the withstand voltage have to be considered.

However, thinning of the dielectric oxide film causes the withstand voltage to decrease according to the decrease in the thickness of the dielectric oxide film, and the leakage current increases. The leakage current at the anode side increases, and the transfer of electric charges and the generation of hydrogen ions on the electrode surface at the anode side become intense. Therefore, in the electrolytic capacitor for middle or high voltage application of 160 V or more, to thin the dielectric oxide film while maintaining the withstand voltage, it is required to give opportunity to the nitro compound added to the electrolytic capacitor to more efficiently suppress hydrogen gas.

The present disclosure has been proposed to solve the above problems, and an objective is to provide an electrolytic capacitor for middle or high voltage application of 160 V or more, which can suppress the total amount of gas generated inside the electrolytic capacitor.

<u>MEANS TO SOLVE THE PROBLEM</u>

As a result of keen research, the inventors have found that nitro compounds mainly cause the hydrogen gas suppression reaction on an end surface of the cathode foil. Here, the cathode foil is industrially cut into a desired size and is assembled in the electrolytic capacitor. Although the dielectric oxide film is formed on a surface of the cathode foil, no dielectric oxide film is formed or extremely thin oxide film is formed on the end surface of the cathode foil that has been exposed by cutting. Therefore, in the end surface region of the cathode foil, the nitro compound gives and receives electrons generated by the chemical reaction formula (1), absorbs hydrogen ions, and inhibits the generation of atomic hydrogen and hydrogen gas.

By this, a reduction site where spontaneous oxidation hardly occurs is formed on the surface of the cathode foil, and by electrically conducting the reduction site and cathode foil, the generation of hydrogen gas can be efficiently suppressed. That is, the nitro compound also receives electrons from this site and absorbs hydrogen ions at this site. Accordingly, the nitro compound prevents the chemical reaction formulae (2) and (3) and suppresses the generation of hydrogen gas.

However, the nitro compound is reduced and absorbs hydrogen ions at the cathode-side, as expressed by the chemical reaction formula (4). By this, atomic hydrogen is produced from hydrogen ions, and a reaction path of the reaction formulae (2) and (3) for converting atomic hydrogen to hydrogen gas is blocked, so that the generation of hydrogen gas is suppressed. By this reaction formula (4), starting from the nitro compound, a reduction product, such as aniline, is produced by the reduction of nitro compounds (hereinafter just referred to as the reduction product).

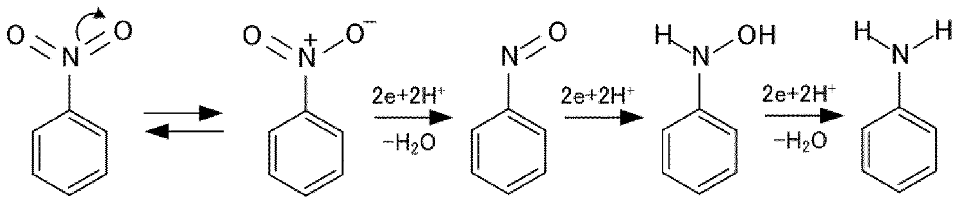


···(4)

When the opportunity for the reduction reaction of the nitro compound is increased by the reduction site while increasing the addition amount of the nitro compound, the production amount of the reduction product significantly increases, and the capacitance of the electrolytic capacitor decreases. In contrast, when the reduction site is formed in the cathode body, since the nitro compound is used efficiently, the generation of hydrogen gas can be suppressed for a long time even if the addition amount of the nitro compound is small.

The present disclosure is achieved based on such knowledges, and to address the above objective, an electrolytic capacitor includes: anode foil on which dielectric oxide film is formed; a cathode body with a reduction site on a surface thereof; and electrolytic solution intervening between the anode foil and the cathode body and containing a

nitro compound, in which: the cathode body includes cathode foil formed of valve metal and a carbon layer which is laminated on the cathode foil and which becomes the reduction site, and the nitro compound is contained in the electrolytic solution in a rate of 1.5 mg or less per $1cm^2$ of a projected area of the cathode body.

Firstly, the capacity appearance rate is defined for the formation of the carbon layer. The capacity appearance rate is ratio of the capacitance of the electrolytic capacitor relative to the capacitance at the anode side. That is, the capacity appearance rate is a percentage of ratio obtained by dividing the synthesized capacitance, which is the capacitance of the electrolytic capacitor as a capacitor in which the anode side and the cathode side is connected in series, by the capacitance at the anode side. The synthesized capacitance can be obtained by dividing the product of the capacitance at the anode side and the cathode side by the sum of the capacitance at the anode side and the cathode side. Therefore, the capacity appearance rate is expressed by the following formula 2

(Formula 2)

$$\text{Capacity Appearance Rate (\%)} = \frac{\text{Cathode-side Capacitance}}{\text{Anode-ide Capacitance} + \text{Cathode-side Capacitance}} \times 100$$

As indicated in the formula 2, when the capacitance at the anode side is large, the effect of the cathode side on the capacity appearance rate becomes large. In contrast, when the capacitance at the anode side is small, the effect of the cathode side on the capacity appearance rate becomes small.

In the field of the electrolytic capacitor, the capacitance per unit area of the anode foil of the electrolytic capacitor for middle or high voltage application of 160 V or more is smaller than that of the anode foil of the electrolytic capacitor for low voltage application. Furthermore, in the electrolytic capacitor for middle or high voltage application of 160 V or more, the difference between the capacitance at the anode side and the cathode side is large. This is because, in the electrolytic capacitor for middle or high voltage application, the dielectric oxide film on the surface of the enlarged surface layer is thick to ensure the withstand voltage, From the viewpoint of improving the capacity appearance rate, in the electrolytic capacitor for low voltage application with large capacitance at the anode side, it is more effective to increase the capacity at the cathode side to increase the capacity appearance rate. However, in the electrolytic capacitor for middle or high voltage application in which the capacitance at the anode side is small or in the electrolytic capacitor in which the capacitance at the cathode side is one or more order of magnitude larger than the capacitance at the anode side, the effect on the improvement of the capacity appearance rate is small even if the capacitance at the cathode side is improved.

For example, for the electrolytic capacitor for low voltage application, when anode foil with the capacitance per 1 $cm^2$ of 10 $\mu$F is used, the capacity appearance rate is 90.9 % when cathode foil with the capacitance per 1 $cm^2$ of 100 $\mu$F is used, and the capacity appearance rate is 99.0 % when cathode foil with the capacitance per 1 $cm^2$ of 1000 $\mu$F is used, meaning that the improvement of 109 % is expected for the capacity appearance rate. In contrast, for the electrolytic capacitor for middle or high voltage application, for anode foil with the capacitance per 1 $cm^2$ of 1 $\mu$F, the capacity appearance rate is 99.0 % when cathode foil with the capacitance per 1 $cm^2$ of 100 $\mu$F is used, and the capacity appearance rate is 99.9 % when cathode foil with the capacitance per 1 $cm^2$ of 1000 $\mu$F is used, meaning that the capacity appearance rate is not improved.

For the capacitor for middle and high application in which the effect of the capacity appearance rate is small even if the capacitance at the cathode side is improved, the capacitance of the cathode foil has not been improved in view of an increased number of processes by using carbon material. However, based on the findings by the inventors, the carbon layer can be re-defined as the reduction site, achieving such electrolytic capacitors.

The cathode foil may have a cathode-side enlarged surface portion on a surface thereof, and the carbon layer may be formed on the cathode-side enlarged surface portion.

The carbon layer and the cathode-side enlarged surface portion may be pressure-welded.

The carbon layer may enter into the cathode-side enlarged surface portion.

The cathode-side enlarged surface portion may have spongy pits, the carbon layer may contain carbon material, and the carbon material of the carbon layer may enter into the spongy pits.

Furthermore, the anode foil may include an enlarged surface portion formed on a surface thereof, and the dielectric oxide film formed on a surface of the enlarged surface portion with thickness of 200 nm or more. The anode foil may have capacitance of 3.5 $\mu F/cm^2$. The electrolytic capacitor may be used for middle or high voltage application of 160 V or more.

## EFFECT OF INVENTION

According to the present disclosure, the reduction of the capacitance of the electrolytic capacitor can be prevented while suppressing the generation of has inside the electrolytic capacitor.

## BRIEF DESCRIPTION OF DRAWINGS

Fig. 1 is a graph indicating the time variation of the volume of electrolytic capacitors of the examples 1 and 2, and the comparative examples 1 to 4.

Fig. 2 is a graph indicating the volume of electrolytic capacitors of the examples 1 and 2, and the comparative examples 1 to 4 for each integrated power consumption.

Fig. 3 is a graph indicating the time variation of the capacity in the examples 1 and 2, and the comparative examples 1 to 3.

Fig. 4 is a graph indicating the capacity of electrolytic capacitors of the examples 1 and 2, and the comparative examples 1 to 3 for each integrated power consumption.

## EMBODIMENTS

(Electrolytic Capacitor)

An electrode body and an electrolytic capacitor using said electrode body according to the embodiment of the present disclosure will be described. The electrolytic capacitor is a passive element that stores and discharges electric charge according to the capacitance. This electrolytic capacitor has a wound-type or laminated-type capacitor element. The capacitor element is formed by facing anode foil which has dielectric oxide film formed on a surface thereof and a cathode body formed of same or different metal foil as the anode foil via a separator, and then impregnating them with electrolytic solution. Note that the electrolytic solution may be solidified into gel.

(Cathode Body)

The cathode body is a laminate body in which a carbon layer containing carbon material is laminated on a surface of cathode foil formed by elongating valve metal as a current collector. It is more difficult for passive film to form on the carbon layer than the valve metal of the cathode foil. The carbon layer becomes a reduction site where electrons are given to a nitro compound.

The valve metal may be aluminum, tantalum, niobium, titanium, hafnium, zirconium, zinc, tungsten, bismuth, and antimony, etc. The purity is preferably about 99% or more.

The carbon material contained in the carbon layer may be activated carbon, graphite, carbon black, carbon nanohorn, or fibrous carbon. Source material for the activated carbon is natural plant tissue such as coconut shell, synthetic resin such as phenol, and activated carbon made from fossil fuel such as coal, coke, and pitch. The graphite may be natural graphite, artificial graphite, and graphitized Ketjen black, etc. The carbon black may be Ketjen black, acetylene black, channel black, and thermal black, etc. The fibrous carbon may be carbon nanotube (hereinafter, CNT) and carbon nanofiber (hereinafter, CNF), etc.

The formation method of the carbon layer on the cathode foil may be vacuum vapor-deposition, sputtering, ion plating, CVD, application, electrolytic plating, or electroless plating, etc. In a case of the application, the carbon material is dispersed in a dispersion solvent to form a slurry, and the slurry is applied and dried on the cathode foil by slurry casting, doctor blading, or spray spraying, etc. In a case of the vapor-deposition, the carbon material is evaporated by electrical heating in vacuum or is evaporated by electron beam irradiation in vacuum, and film of the carbon material is formed on the cathode foil. Furthermore, in the case of the sputtering, the cathode foil and a target formed of carbon material are placed in a vacuum container, inert gas is introduced into the vacuum container, and voltage is applied to bombard the target with plasma inert gas, so that particles of carbon material beaten out from the target is deposited on the cathode foil.

Note that natural oxide film or chemical conversion film may be formed on a region other than the carbon layer. The natural oxide film is formed when the cathode foil reacts with oxygen in the air, and the chemical conversion film is oxide film intentionally formed by the chemical conversion treatment of applying voltage in solution without halogen ions such as aqueous solution of adipic acid, boric acid, or phosphoric acid. When the valve metal is aluminum, the oxide film is aluminum oxide.

However, when the cathode body is a laminated body of the cathode foil and the carbon layer, it is preferable to conduct electricity between the valve metal and the carbon layer by adhering the carbon layer to the cathode foil, and breaking the natural oxide film or the chemical conversion film, or thinning the natural oxide film or the chemical conversion film as thin as the tunneling effect to occur. When the carbon material of the carbon layer breaks through this film, the carbon layer can be easily conducted with the non-oxidized metal portion of the cathode foil, easily becoming an excellent reduction site and efficiently delivering electrons to the nitro compound.

To improve the adhesion of the carbon layer and the cathode foil, it is preferable to press-process the cathode

body formed by the carbon layer and the cathode foil. For example, in the press-processing, the cathode body formed by the carbon layer and the cathode foil is sandwiched by a press roller, and press linear pressure is applied. The press pressure is desirably about 0.01 to 100t/$cm^2$. By the press-processing, the natural oxide film and the chemical conversion film can be easily broken through.

Furthermore, a surface enlarged layer may be formed on the surface of the cathode foil to enlarge the surface area of the cathode body. The enlarged surface layer is formed by electrolytic etching, chemical etching, or sandblasting, and the like, or formed by vapor-depositing or sintering metal particles and the like, on a foil body. The electrolytic etching may be AC etching. For example, in the AC etching process, the cathode foil is immersed in aqueous acidic solution in which halogen ions are present, such as hydrochloric acid, and AC current is applied. Furthermore, in the chemical etching, the metal foil is immersed in acidic solution or alkaline solution. That is, the enlarged surface layer is a region where spongy etching pits are formed or a region with porous structure formed by air gaps between dense powder. Note that the etching pit may be tunnel-shaped etching pit formed by AC etching or may be formed so that the tunnel-shaped etching pit penetrates the cathode foil.

By enlarging the surface area of the cathode body by forming the enlarged surface layer, a number of the conduction paths between the reduction site and the cathode foil increases, and the conduction oath becomes thicker and more adhered. Therefore, the opportunity of the reduction reaction of the nitro compound increases, and the generation of hydrogen gas is suppressed.

Furthermore, forming the enlarged surface layer makes the cathode foil and the carbon layer to further easily adhere to each other. That is, the carbon material enters into unevenness of the enlarged surface layer, so that the adhesion of the carbon layer and the cathode foil is improved. By the press-processing in addition to forming the enlarged surface layer, the carbon material can be pressed into pores of the enlarged surface layer and the carbon material can be deformed along an uneven surface of the enlarged surface layer, so that the adhesion and fixity of the carbon layer and the cathode foil is further improved.

When forming the enlarged surface layer, in particular, the carbon material contained in the carbon layer is preferably carbon black that is spherical carbon. When the enlarged surface layer formed on the surface of the cathode foil is the etching pit, by using carbon black with the diameter smaller than the opening diameter of the etching pit, carbon black can easily enter deeper into the etching pit, and the carbon layer adheres to the cathode foil.

However, two or more kinds of the carbon material may be mixed and contained in the carbon layer. For example, flake or vein graphite and carbon black that is spherical carbon are suitable for the carbon material contained in the carbon layer. It is preferable that the flake or vein graphite has an aspect ratio between short and long diameters of 1:5 to 1:100. The average primary diameter of the carbon black that is spherical carbon is preferably 100 nm or less. When the carbon layer containing this combination of the carbon material is laminated on the cathode foil, it is easy for carbon black to be rubbed into the pores of the enlarged surface layer by graphite. The graphite easily deforms along the uneven surface of the enlarged surface layer and is easily laminated on the uneven surface. Accordingly, the graphite acts as a pressing lid that presses and holds the spherical carbon that has been rubbed into the pores. Thus, the adhesion and fixity of the carbon layer and the cathode foil are improved.

Furthermore, since $\pi$-electrons are delocalized and the specific surface is large, activated carbon and fibrous carbon may be added to the carbon layer together with carbon black that is spherical carbon or together with flake or vein graphite and carbon black that is spherical carbon.

(Anode foil)

The anode foil is a long foil body formed of valve metal. The purity of the anode foil is desirably about 99.9% or more. The anode foil is formed by forming an enlarged surface layer on the elongated foil, and forming the dielectric oxide film on a surface of the enlarged surface layer. The enlarged surface layer is designed for middle and high voltage application of 160 V or more, and has a number of tunnel-shaped etching pits dug from the surface of the foil in the depth direction by DC etching. To cope with higher capacity demand, the tunnel-shaped etching pits may be formed to penetrate the anode foil. Otherwise, the enlarged surface layer is formed by sintering powder of the valve metal, or vapor-depositing film of metal particles or the like on the foil to apply the film.

The dielectric oxide film formed on the anode foil is typically oxide film formed on a surface layer of the anode foil, and when the anode foil is formed of aluminum, it is an aluminum oxide layer obtained by oxidizing a porous structural region. This dielectric oxide film is formed by chemical conversion treatment in which voltage is applied in solution without halogen ions such as aqueous solution of ammonium borate, ammonium phosphate, ammonium adipate, or combinations thereof.

It is preferable that the dielectric oxide film has the thickness that produces the anode-side capacitance of 3.5 $\mu F/cm^2$ or less, for middle and high voltage application. If the anode-side capacitance of more than 3.5 $\mu F/cm^2$ is to be produced, the dielectric oxide film becomes thinner and the withstand voltage becomes smaller. Furthermore, the dielectric oxide film with the thickness of 200 nm or more can contribute to the withstand voltage of the electrolytic

capacitor for middle and high voltage application of 160 V or more.

(Electrolytic Solution)

The electrolytic solution is mixed solution in which a solute is dissolved in a solvent and additives are added as necessary. The solvent is preferably ethylene glycol. When the solvent is ethylene glycol, the withstand voltage of the electrolytic capacitor is improved, and the electrolytic capacitor becomes suitable for middle and high voltage application of 160 v or more. However, the solvent may be either of a protic organic polar solvent or an aprotic organic polar solvent if the required withstand voltage can be obtained by surface enlargement treatment or chemical conversion treatment to the anode foil. Typical protic organic polar solvents include monohydric alcohol, polyhydric alcohol, and oxyalcohol compounds. Typical aprotic organic polar solvents include sulfones, amides, lactones, cyclic amides, nitriles, and oxides.

A solute contained in the electrolytic solution contains anion and cation components, is typically organic acid or a salt thereof, inorganic acid or a salt thereof, or a composite compound of organic acid and inorganic acid or an ion dissociative salt thereof, and is used alone or in combination of two or more. Acid that is the anion and base that is the cation may be separately added to the electrolytic solution as the solute components.

Nitro compound that receives electrons and absorbs hydrogen ions at the reduction site of the cathode body is added to the electrolytic solution The nitro compound may be o-nitrobenzyl alcohol, p-nitrobenzyl alcohol, m-nitrobenzyl alcohol, o-nitrobenzoic acid, m-nitrobenzoic acid, p-nitrobenzoic acid, o-nitrophenol, m-nitrophenol, and p-nitrophenol, nitrobenzene etc.

The nitro compound is added to the electrolytic solution at a rate of 1.5 mg or less per 1 $cm^2$ of the projected area of the cathode body. Since forming the reduction site such as the carbon layer on the cathode foil increaes the opportunity for the reduction reaction of the nitro compound, when the addition amount of the nitro compound increases, the reduction product of the nitro compound increases. However, when the nitro compound is added to the electrolytic solution at a rate of 1.5 mg or less per 1 $cm^2$ of the projected area of the cathode body, the production amount of the reduction product will be within an allowable range and will not inhibit the development of the capacitance of the electrolytic capacitor.

Furthermore, other additives may be added to the electrolytic solution. The additives may be polyethylene glycol, complex compounds of boric acid and polysaccharides (mannit, sorbit, etc.), complex compounds of boric acid and polyhydric alcohol, borate esters, nitro compounds, and phosphate esters, etc. These may be used in single or in combination of two or more.

(Separator)

The separator is interposed between the anode foil and the cathode body and holds the electrolytic solution in order to prevent short circuit between the anode foil and the cathode body. The separator may be cellulose such as kraft, Manila hemp, esparto, hemp, rayon, and mixed papers thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamides, semi-aromatic polyamides, and fully aromatic polyamides, polyimide resin, polyethylene resin, polypropylene resin, trimethylpentene resin, polyphenylene sulfide resin, acrylic resin, and the like, and these resin may be used in single or in combination and may be mixed and used with cellulose.

(Examples)

Hereinafter, the present disclosure will be described in more detail based on examples. Note that the present disclosure is not limited to the following examples.

(Example 1)

An electrolytic capacitor of the example 1 was produced for high voltage application with constant voltage of 225 V. 3 cm × 4 cm aluminum foil was used as cathode foil. AC etching was performed on the aluminum foil to form enlarged surface layers formed by spongy etching pits on both surfaces of the foil. In the AC etching process, the cathode foil was immersed in acidic aqueous solution with hydrochloric acid having the liquid temperature of 25 oC and percent by weight of 8 wt% as a main electrolyte, and current with alternating current of 10 Hz and current density of 0.14 $A/cm^2$ was applied to a substrate for about 5 minutes to enlarge both surfaces of the aluminum foil. Furthermore, chemical conversion process was performed on the aluminum foil to form dielectric oxide film on the surface of the enlarged surface layer. In the chemical conversion treatment, after chlorine attached in the AC etching process was removed using phosphoric acid aqueous solution, voltage was applied in aqueous solution of ammonium dihydrogen phosphate.

The carbon layer was laminated on the cathode foil. The carbon layer contained carbon black as carbon material.

In detail, powder of carbon black, styrene butadiene rubber (SBR) as a binder, and sodium carboxymethyl cellulose (CMC-Na) aqueous solution as aqueous solution containing a dispersing agent were mixed and kneaded to produce a slurry.

This slurry was uniformly applied on the cathode foil. Next, the slurry was heated and dried to volatilize the solvent, and then, press-processing was applied to the cathode body. In the press-processing, the cathode body was sandwiched by a press roller, and press linear pressure of 5.38 kN/cm was applied to fix the carbon layer on the cathode foil. The press linear pressure was applied using a press machine manufactured by TAKUMI GIKEN. The diameter of the press roller was 180 mm, the press-processing width was 130 mm, and the cathode body was transported once at 3 m/min.

Furthermore, 3 cm × 4 cm aluminum foil was used as anode foil. DC etching was performed on the aluminum foil to form enlarged surface layers formed by tunnel-shaped etching pits of the foil. In the DC etching process, a first process of forming pits and a second process of enlarging the pits were used, and in the first process, electrochemical etching process was performed on the aluminum foil by DC current in aqueous solution containing chlorine ions. In the second process, electrochemical etching process was performed by DC current in aqueous solution containing nitrate ions to enlarge the pits formed in the aluminum foil after the first process.

After the enlarged surface layer was formed, the chemical conversion treatment to form the dielectric oxide film on the surface of the enlarged surface layer was performed. In detail, voltage of 650 V was applied in chemical conversion solution of boric acid of 70 percent by weight at liquid temperature of 85 oC.

The anode foil and the cathode body were each connected by ultrasonic to a tab-shaped lead terminal formed of aluminum. Next, the anode foil was sandwiched by two cathode bodies via separators to produce a laminate. A 4 cm × 5 cm kraft-type separator was used as the separators. Note that before the lamination, the back surface among the surfaces of the cathode body, which is opposite the surface facing the anode foil via the separator is covered by insulation resin.

The laminate of the anode foil, the cathode body, and the separator was impregnated with the electrolytic solution. Ethylene glycol as the solvent and azelaic acid salt as the solute were added to prepare the electrolytic solution. Furthermore, paranitrobenzyl alcohol was added to the electrolytic solution as the nitro compound at 0.4 percent by weight relative to the total amount of the electrolytic solution. The nitro compound was added in an amount equivalent to 0.7 $mg/cm^2$ per 1 $cm^2$ of the projected area of the cathode body.

After impregnating the electrolytic solution, the laminate of the anode foil, the cathode body, and the separator was sealed by laminate material. The lead terminals connected to the anode foil and the cathode body were drawn out of the laminate material. By this, the electrolytic capacitor was produced as a laminated cell. Aluminum laminate material with the thickness of 110 μm was used. After the laminated cell was produced, an aging process was performed. In the aging process, voltage of 230 V was applied at normal temperature (30 oC) for 60 minutes. By this, the electrolytic capacitor according to the example 1 with the constant voltage of 225 V was produced.

(Example 2)

Furthermore, an electrolytic capacitor of the example 2 was produced. In the electrolytic capacitor of the example 2, paranitorbenzyl alcohol was added to the electrolytic solution as the nitro compound at 0.8 percent by weight relative to the total amount of the electrolytic solution. The nitro compound was added in an amount equivalent to 1.5 $mg/cm^2$ per 1 $cm^2$ of the projected area of the cathode body. Other, the electrolytic capacitors of the example 2 was produced by the same production method and under the same condition as that of the example 1, including the composition of the carbon layer formed on the cathode foil.

(Comparative Example 1)

Furthermore, an electrolytic capacitor of the comparative example 1 was produced. In the electrolytic capacitor of the comparative example 1, paranitorbenzyl alcohol was added to the electrolytic solution as the nitro compound at 1.2 percent by weight relative to the total amount of the electrolytic solution. The nitro compound was added in an amount equivalent to 2.2 $mg/cm^2$ per 1 $cm^2$ of the projected area of the cathode body. Other, the electrolytic capacitors of comparative example 1 was produced by the same production method and under the same condition as that of the example 1, including the composition of the carbon layer formed on the cathode foil.

(Comparative Example 2)

Furthermore, an electrolytic capacitor of the comparative example 2 was produced. In the electrolytic capacitor of the comparative example 2, cathode foil formed by elongating aluminum foil was used as the cathode body. The purity of the aluminum foil was 99.9 % or more, and no other laminate, such as a carbon layer, was on a surface of the aluminum foil. Similarly to the example 2, paranitorbenzyl alcohol was added to the electrolytic solution as the nitro compound at 0.8 percent by weight relative to the total amount of the electrolytic solution. Similarly to the example 2, the nitro compound was added in an amount equivalent to 1.5 $mg/cm^2$ per 1 $cm^2$ of the projected area of the cathode body. Other, the electrolytic

capacitors of the comparative examples 2 was produced by the same production method and under the same conditions as that of the example 1, such as the electrolytic solution containing the nitro compound.

(Comparative Example 3)

Furthermore, an electrolytic capacitor of the comparative example 3 was produced. In the electrolytic capacitor of the comparative example 3, cathode foil formed by elongating aluminum foil was used as the cathode body. The purity of the aluminum foil was 99.9 % or more, and no other laminate, such as a carbon layer, was on a surface of the aluminum foil. Furthermore, paranitorbenzyl alcohol was added to the electrolytic solution as the nitro compound at 1.6 percent by weight relative to the total amount of the electrolytic solution. The nitro compound was added in an amount equivalent to 3.0 $mg/cm^2$ per 1 $cm^2$ of the projected area of the cathode body. Other, the electrolytic capacitors of the comparative example 3 was produced by the same production method and under the same conditions as that of the example 1, such as the electrolytic solution containing the nitro compound.

(Comparative Example 4)

Furthermore, an electrolytic capacitor of the comparative example 4 was produced. In the electrolytic capacitor of the comparative example 4, cathode foil formed by elongating aluminum foil was used as the cathode body. The purity of the aluminum foil was 99.9 % or more, and no other laminate, such as a carbon layer, was on a surface of the aluminum foil. The nitro compound was not added to the electrolytic solution.

(Gas Generation Measurement Test)

The generation amount of gas for the electrolytic capacitors of the examples 1 and 2, and the comparative examples 1 to 4 was measured. High voltage of DC225 V was applied to each electrolytic capacitor under the temperature environment of 105 oC, and the generation amount of gas was measured for each elapsed time. The generation amount of gas was measured by a swelling volume (volume change; ml) of the laminated cell. The swelling amount of the laminated cell was measured by the Archimedes method. That is, the volume of the liquid removed by the laminated cell was measured by measuring the weight increased when the laminated cell was immersed in water.

Furthermore, the integrated power consumption (C) of leakage current when measuring the generation amount of gas was measured. To measure the integrated power consumption, a resistance of 100 kΩ was connected in series to the electrolytic capacitor, and when current was applied was applied, the voltage value applied on the resistance at the same time was measured periodically. The leakage current was calculated by dividing the voltage value by the resistance value. Then, the integrated power consumption (C) at the time of Nth measurement was calculated by multiplying the sum of the leakage current up to Nth measurement by the time interval of the voltage value measurement.

The relationship between the generation amount of gas and the elapsed time is shown in Fig. 1. Furthermore, the relationship between the generation amount of gas and the integrated power consumption is shown in Fig. 2. Fig. 1 is a graph indicating the time variation of the volume of electrolytic capacitors of the examples 1 and 2, and the comparative examples 1 to 4. Fig. 2 is a graph indicating the volume of electrolytic capacitors of the examples 1 and 2, and the comparative examples 1 to 4 for each integrated power consumption.

As indicated in Fig. 1, the swelling of the electrolytic capacitor of the comparative example 3 began after 258 hours had elapsed from the start of measurement of the generation amount of gas, and became drastic after 570 hours had elapsed. In contrast, as indicated in Fig. 1, the swelling of the electrolytic capacitors of the examples 1 and 2 and the comparative example 1 did not begin even after 570 hours had elapsed from the start of measurement of the generation amount of gas and begun after 1026 hours had elapsed, however, the change was mild.

As indicated in Fig. 2, the swelling of the electrolytic capacitor of the comparative example 3 began after the integrated power consumption of leakage current had reached 1.2 $C/cm^2$, and the change thereafter was drastic. In contrast, the swelling of the electrolytic capacitor of the example 1 began after the integrated power consumption of leakage current had reached 2.0 $C/cm^2$. The swelling of the electrolytic capacitor of the example 2 began after the integrated power consumption of leakage current had reached 2.4 $C/cm^2$. The swelling of the electrolytic capacitor of the comparative example 1 began after the integrated power consumption of leakage current had reached 2.8 $C/cm^2$.

The swelling of the electrolytic capacitor occurs due to the generation of hydrogen gas. Therefore, the integrated power consumption when the swelling of the electrolytic capacitor becomes drastic can be referred to as the integrated power consumption when the hydrogen gas starts to generate. Accordingly, in the examples 1 and 2 and the comparative example 1, it can be assumed that, the generation of hydrogen gas was suppressed by the reduction reaction of the nitro compound at the beginning of the test when voltage was applied, however, as the test time had elapsed, the hydrogen gas was generated because the nitro compound disappeared at the time of the integrated power consumption when the swelling of the electrolytic capacitor became drastic. That is, it is indicated that, the integrated power consumption when

the swelling of the electrolytic capacitor became drastic was the integrated power consumption when the nitro compound disappeared, and the integrated power consumption which consumes the nitro compound was different depending on the addition amount of the nitro compound.

Here, in the electrolytic capacitor of the comparative example 3, the nitro compound was added to the electrolytic solution at a rate of 3.0 mg per 1 $cm^2$ of the projected area of the cathode body. In contrast, in the electrolytic capacitors of the examples 1 and 2 and the comparative example 1, the nitro compound was added to the electrolytic solution at a rate of 2.2 $mg/cm^2$ per 1 $cm^2$ of the projected area of the cathode body at maximum.

From this result, in the electrolytic capacitors of the examples 1 and 2 and the comparative example 1, it can be observed that, since the carbon layer, which had broken through the dielectric oxide film and had been electrically conducted with aluminum of the cathode foil, was formed on the surface of the cathode foil, the nitro compound efficiently received electrons with the carbon layer as the reduction site and absorbed hydrogen ions. In contrast, in the electrolytic capacitor of the comparative example 3, it can be observed that, since the surface of the cathode foil was covered with the dielectric oxide film, a region where the nitro compound could receive electrons were limited to the end surface region of the cathode foil, such that absorption of hydrogen ions could not catch up and the generation of hydrogen gas continued.

By this, it is observed that, when the cathode body had the carbon layer that is the reduction site on the surface thereof, the nitro compound could efficiently receive electrons and facilitate the absorption of hydrogen ions, suppressing the generation of hydrogen gas.

Here, in the electrolytic capacitor of the comparative example 4, the cathode body did not have the carbon layer, and the nitro compound was not added to the electrolytic solution. In the electrolytic capacitor of the comparative example 4, the swelling had begun in the aging process during the manufacturing, and was drastic from immediately after the beginning of the measurement of the generation amount of gas.

The cathode body of the electrolytic capacitor of the comparative example 2 did not have the carbon layer, the amount of the nitro compound added to the electrolytic solution was limited to 1.5 $mg/cm^2$ per 1 $cm^2$ of the projected area of the cathode body. Also in the electrolytic capacitor of the comparative example 2, the addition amount of the nitro compound was too small when the carbon layer was not present, and the swelling had begun in the aging process during the manufacturing and was drastic from immediately after the beginning of the measurement of the generation amount of gas.

In the electrolytic capacitor of the comparative example 2, since the surface of the cathode foil was covered with the dielectric oxide film, a region where the nitro compound could receive electrons were limited to the end surface region of the cathode foil and the addition amount of the nitro compound was small. Therefore, in the electrolytic capacitor of the comparative example 2, it is assumed that the opportunity of the reduction reaction of the nitro compound was limited, and the generation of hydrogen gas could not be suppressed.

In contrast, in the electrolytic capacitor of the example 2, the nitro compound was added in the same amount as the comparative example 2. However, it is considered that the nitro compound of the example 2 had more opportunities of the reduction reaction with the carbon layer as the reduction site. Therefore, it is thought that, although the addition amount of the nitro compound in the example 2 was too small for the electrolytic capacitor with aluminum foil as the cathode body, the generation of hydrogen gas was efficiently suppressed.

From these results, it is found that, if the surface condition of the cathode foil was the same, the greater the amount of the nitro compound added to the electrolytic solution, the more the opportunity of the reduction reaction of the nitro compound could continue and the generation of hydrogen gas could be more suppressed. From this, it can be said that the generation of hydrogen gas can be more suppressed by adding large amount of the nitro compound to the electrolytic solution. Furthermore, it is observed that, the electrolytic capacitor using the cathode body with the reduction site could efficiently suppress the generation of hydrogen gas even if the amount of the nitro compound added to the electrolytic solution was equivalent or less, in comparison to the electrolytic capacitor using the cathode body without the reduction site. From these, it can be said that the cathode body in which the reduction site was formed can efficiently suppress the generation of hydrogen gas by the nitro compound.

(Capacitance Measurement Test)

The capacitance of the electrolytic capacitors of the examples 1 and 2, and the comparative examples 1 to 3 was measured. High voltage of DC450 V was applied to each electrolytic capacitor under the temperature environment of 105 oC, and the capacitance was measured for each elapsed time. LCR meter (from Agilent Technologies, 4284A) was used for the measurement. The measurement environment was the ambient temperature of 20 oC, the DC current level of 0.5 vrms or less, and the measurement frequency of 120 Hz.

The relationship between the capacitance and the elapsed time is shown in Fig. 3. Furthermore, the relationship between the capacitance and the integrated power consumption is shown in Fig. 4. Fig. 3 is a graph indicating the time variation of the capacitance in the examples 1 and 2, and the comparative examples 1 and 3. Fig. 4 is a graph indicating the capacitance of electrolytic capacitors of the examples 1 and 2, and the comparative examples 1 and 3 for each integrated

power consumption.

As indicated in Figs. 3 and 4, there was no significant change in the capacity of the electrolytic capacitor of the comparative example 3 with respect to the elapsed time and the integrated power consumption of leakage current. In contrast, the capacitance of the electrolytic capacitor of the comparative example 1 significantly decreased lower than the comparative example 3 in the middle of the test. In contrast, there was no significant change in the capacity of the electrolytic capacitor of the examples 1 and 2 with respect to the elapsed time and the integrated power consumption of leakage current, like the comparative example 3.

From this, it is found that, in the case the cathode body with the carbon layer that is the reduction site of the nitro compound was used, when the addition amount of the nitro compound was small, the capacity did not decrease over time, and when the addition amount of the nitro compound was large, the capacity decreased over time. In other words, it is found that, in a case the cathode body with the carbon layer that is the reduction site of the nitro compound was used, when the addition amount of the nitro compound was small, the capacity did not decrease regardless of the integrated power consumption, and when the addition amount of the nitro compound was large, the capacity decreased by the integrated power consumption.

In contrast, it is found that, in a case cathode body without the carbon layer that is the reduction site of the nitro compound was used, even when the addition amount of the nitro compound was large, the capacity did not decrease over time. In other words, it is found that, in a case cathode body without the carbon layer that is the reduction site of the nitro compound was used, even when the addition amount of the nitro compound was large, the capacity did not decrease by the integrated power consumption.

That is, it is indicated that, the decrease in the capacity due to the nitro compound occurred if the nitro compound was remaining in the electrolytic solution, when the cathode foil with the carbon layer that is the reduction site of the nitro compound was used and the electrolytic capacitor had the integrated power consumption in which the capacity decreases due to the nitro compound added to the electrolytic solution. This indicates that, to suppress the generation of hydrogen gas while avoiding the decrease in the capacity due to the nitro compound by the reduction reaction of the nitro compound by the reduction site of the cathode body, it is needed to limit the amount of the nitro compound added to the electrolytic solution to an amount that will be consumed before the electrolytic capacitor reaches the integrated power consumption that causes the decrease in the capacity due to the nitro compound.

In the electrolytic capacitor of the comparative example 1 the nitro compound was added to the electrolytic solution at a rate of 2.2 $mg/cm^2$ per 1 $cm^2$ of the projected area of the cathode body. In contrast, in the electrolytic capacitors of the examples 1 and 2, the nitro compound was added to the electrolytic solution at a rate of 1.5 $mg/cm^2$ per 1 $cm^2$ of the projected area of the cathode body at maximum.

In the comparative example 1, the nitro compound was added in a large amount, and the cathode body had the carbon layer as the reduction site that increases the opportunity of the reduction reaction of the nitro compound. Therefore, it is assumed that, in the comparative example 1, the reduction product of the nitro compound was produced beyond the allowable amount for the electrolytic capacitor of the comparative example 1. Accordingly, it is assumed that, in the comparative example 1, the capacitance decreased by this reduction product.

In contrast, in the examples 1 and 2, the nitro compound was added at a rate of 1.5 mg or less per 1 $cm^2$ of the projected area of the cathode body, which is lower than the comparative example 1. Therefore, it is assumed that, in the examples 1 and 2, the reduction product of the nitro compound was below the allowable amount of the electrolytic capacitor. Accordingly, it is assumed that the development of the capacitance was not inhibited.

Thus, according to the gas generation measurement test and the capacitance measurement test, by providing the reduction site such as the carbon layer on the cathode body and adding the nitro compound in a rate of 1.5 mg or less per 1 $cm^2$ of the projected area of the cathode body, the nitro compound can efficiently suppress the generation of hydrogen gas without reducing the capacitance of the electrolytic capacitor.

## Claims

**1.** An electrolytic capacitor comprising:

anode foil on which dielectric oxide film is formed;
a cathode body with a reduction site on a surface thereof; and
electrolytic solution intervening between the anode foil and the cathode body and containing a nitro compound, wherein:

the cathode body includes cathode foil formed of valve metal, and a carbon layer which is laminated on the cathode foil and which becomes the reduction site, and
the nitro compound is contained in the electrolytic solution in a rate of 1.5 mg or less per 1$cm^2$ of a projected

area of the cathode body.

**2.** The electrolytic capacitor according to claim 1, wherein:

the cathode foil has a cathode-side enlarged surface portion on a surface thereof, and
the carbon layer is formed on the cathode-side enlarged surface portion.

**3.** The electrolytic capacitor according to claim 2, wherein the carbon layer and the cathode-side enlarged surface portion are pressure-welded.

**4.** The electrolytic capacitor according to claim 2, wherein the carbon layer enters into the cathode-side enlarged surface portion.

**5.** The electrolytic capacitor according to claim 4, wherein:

the cathode-side enlarged surface portion has spongy pits,
the carbon layer contains carbon material, and
the carbon material of the carbon layer enters into the spongy pits.

**6.** The electrolytic capacitor according to any one of claims 1 to 5, wherein the anode foil comprises:

an enlarged surface portion formed on a surface thereof, and
the dielectric oxide film formed on a surface of the enlarged surface portion with thickness of 200 nm or more.

**7.** The electrolytic capacitor according to any one of claims 1 to 5, wherein the anode foil has capacitance of 3.5 $\mu F/cm^2$.

**8.** The electrolytic capacitor according to any one of claims 1 to 5 used for middle or high voltage application of 160 V or more.

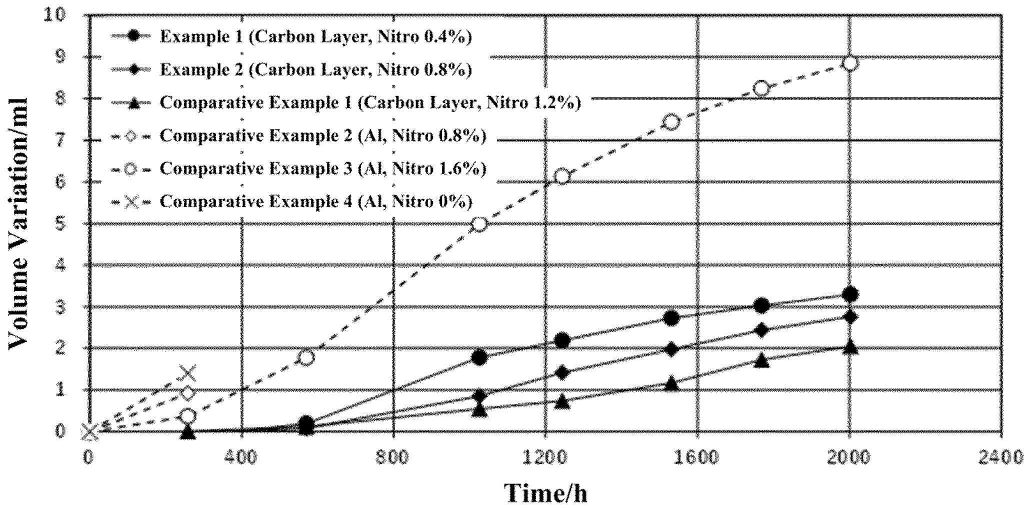
Example 1 (Carbon Layer, Nitro 0.4%)
Example 2 (Carbon Layer, Nitro 0.8%)
Comparative Example 1 (Carbon Layer, Nitro 1.2%)
Comparative Example 2 (Al, Nitro 0.8%)
Comparative Example 3 (Al, Nitro 1.6%)
Comparative Example 4 (Al, Nitro 0%)
Volume Variation/ml
Time/h
0
1
2
3
4
5
6
7
8
9
10
0
400
800
1200
1600
2000
2400

*Fig. 1*

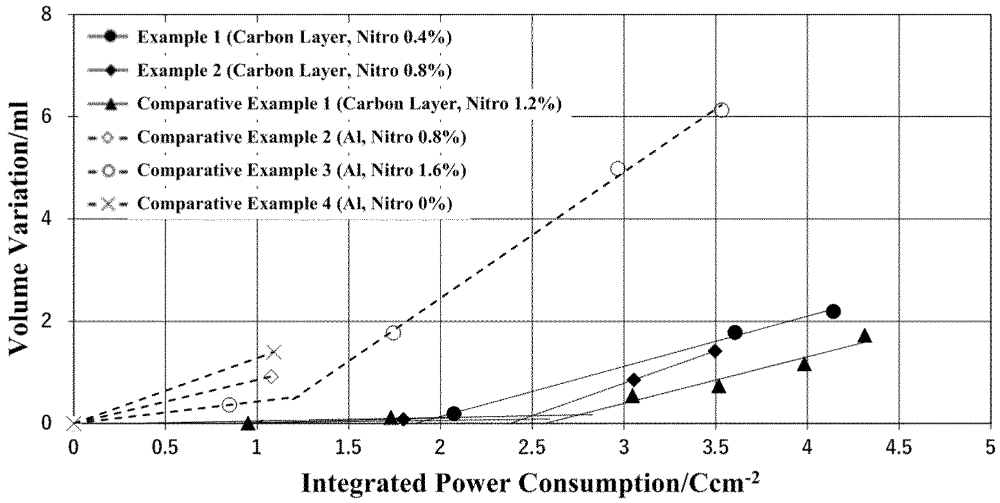
Example 1 (Carbon Layer, Nitro 0.4%)
Example 2 (Carbon Layer, Nitro 0.8%)
Comparative Example 1 (Carbon Layer, Nitro 1.2%)
Comparative Example 2 (Al, Nitro 0.8%)
Comparative Example 3 (Al, Nitro 1.6%)
Comparative Example 4 (Al, Nitro 0%)
Volume Variation/ml
Integrated Power Consumption/Ccm-2
0
2
4
6
8
0
0.5
1
1.5
2
2.5
3
3.5
4
4.5
5

*Fig. 2*

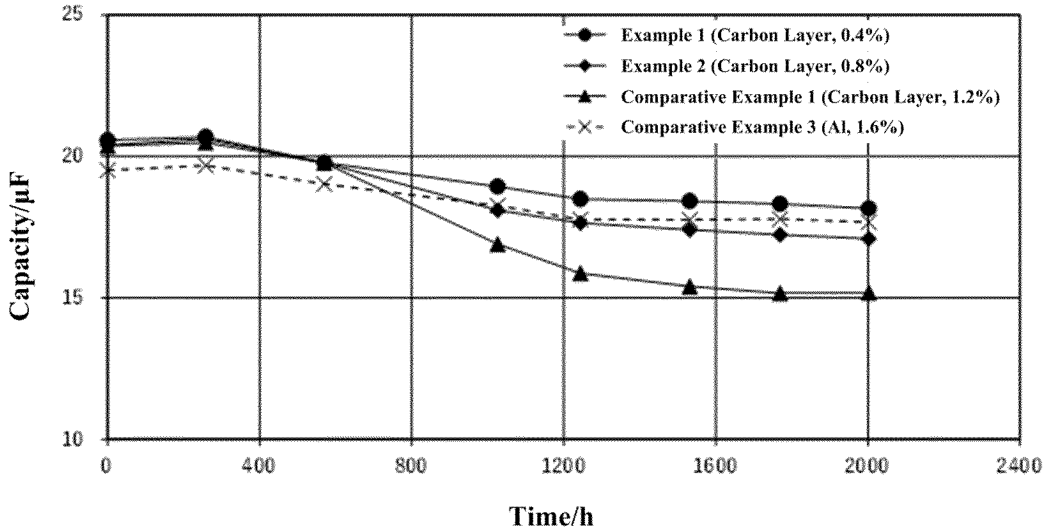
Example 1 (Carbon Layer, 0.4%)
Example 2 (Carbon Layer, 0.8%)
Comparative Example 1 (Carbon Layer, 1.2%)
Comparative Example 3 (Al, 1.6%)
Capacity/μF
25
20
15
10
0
400
800
1200
1600
2000
2400
Time/h

*Fig. 3*

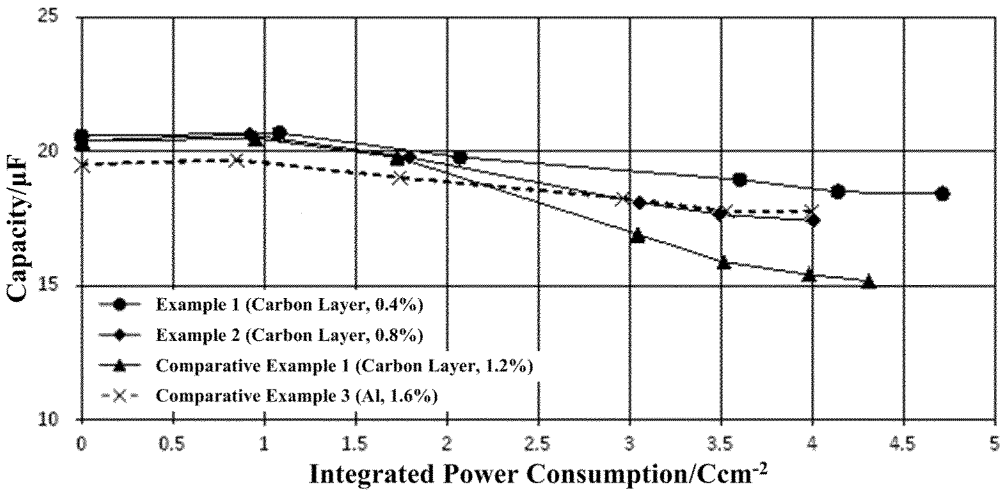
25
20
15
10
Capacity/μF
0
0.5
1
1.5
2
2.5
3
3.5
4
4.5
5
Integrated Power Consumption/Ccm-2
Example 1 (Carbon Layer, 0.4%)
Example 2 (Carbon Layer, 0.8%)
Comparative Example 1 (Carbon Layer, 1.2%)
Comparative Example 3 (Al, 1.6%)

*Fig. 4*

**INTERNATIONAL SEARCH REPORT**

International application No.
**PCT/JP2023/023609**

**A. CLASSIFICATION OF SUBJECT MATTER**

***H01G 9/055***(2006.01)i; ***H01G 9/035***(2006.01)i; ***H01G 9/042***(2006.01)i; ***H01G 9/145***(2006.01)i
FI: H01G9/055 105; H01G9/035; H01G9/042 500; H01G9/145

According to International Patent Classification (IPC) or to both national classification and IPC

**B. FIELDS SEARCHED**

Minimum documentation searched (classification system followed by classification symbols)

H01G9/055; H01G9/035; H01G9/042; H01G9/145

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/125220 A1 (NIPPON CHEMI-CON CORP.) 24 June 2021 (2021-06-24) claims, paragraphs [0013], [0031]-[0051], table 3 | 1-8 |
| A | JP 2022-058323 A (NIPPON CHEMI-CON CORP.) 11 April 2022 (2022-04-11) entire text, all drawings | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 August 2023** | **12 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/023609**

| Patent document cited in search report | Publication date (day/month/year) | Patent family member(s) | Publication date (day/month/year) |
|---|---|---|---|
| WO 2021/125220 A1 | 24 June 2021 | US 2022/0415582 A1<br>claims, paragraphs [0012], [0040]-[0063], table 3<br>EP 4080532 A1 | |
| JP 2022-058323 A | 11 April 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0410512 A